# EUROPÄISCHE PATENTSCHRIFT

(11) **EP 3 026 286 B1**
(45) Veröffentlichungstag und Bekanntmachung des Hinweises auf die Patenterteilung: **01.05.2019**
(21) Anmeldenummer: 15176441.2
(22) Anmeldetag: 13.07.2015
(51) Int. Cl.: F16D 55/227, F16D 65/40, F16D 65/18

(54) **SCHEIBENBREMSE FÜR EIN NUTZFAHRZEUG**
DISC BRAKE FOR A COMMERCIAL VEHICLE
FREIN A DISQUE POUR UN VEHICULE UTILITAIRE

(30) Priorität: 07.08.2014 DE 102014111226; 09.04.2015 DE 102015105344
(43) Veröffentlichungstag der Anmeldung: 01.06.2016
(73) Patentinhaber: KNORR-BREMSE Systeme für Nutzfahrzeuge GmbH, 80809 München (DE)
(72) Erfinder: FISCHER, Rudolf, 85435 Erding (DE); BALINT, Peter, 71069 Sindelfingen (DE); KLINGNER, Matthias, 82272 Moorenweis (DE); WEBER, Ralf, 80992 München (DE)

(56) Entgegenhaltungen:
- EP-A1- 0 648 952
- EP-A1- 1 916 438
- EP-A1- 2 412 997
- WO-A1-2008/025489
- WO-A1-2014/016224
- WO-A2-2004/013510

## Beschreibung

Die Erfindung betrifft eine Scheibenbremse für ein Nutzfahrzeug nach dem Oberbegriff des Anspruchs 1.

Der Bremssattel einer solchen Scheibenbremse, der eine fahrzeugseitige Bremsscheibe übergreift, dient zum einen der Lagerung von Funktionsteilen, die zum Betrieb der Scheibenbremse erforderlich sind, und zum anderen der Aufnahme von beim Bremsen auftretenden Kräften.

Zu den Funktionsteilen zählt u.a. eine Zuspanneinrichtung, die in einer Aufnahmekammer des Bremssattels angeordnet ist und die einen sich einerseits an einer Innwandung des Bremssattels und andererseits an einer Brücke abstützenden schwenkbaren Bremshebel aufweist, sowie mindestens eine als Gewindespindel ausgebildete Stellspindel, die in einer Gewindebohrung der Brücke verdrehbar gelagert ist.

Des Weiteren ist eine Nachstelleinrichtung vorgesehen, mit der ein sich verschleißbedingt veränderndes Lüftspiel, also des Abstands zwischen dem zugeordneten Bremsbelag und der Bremsscheibe, ausgeglichen wird. Zum Schutz der Aufnahmekammer vor Schmutz und Witterungseinflüssen, ist der Stellspindel ein Balg zugeordnet, durch den der Austrittsbereich der Stellspindel aus dem Bremssattel hermetisch abgedichtet ist.

Dabei ist der Balg einerseits, üblicherweise reibschlüssig, an einer die Aufnahmekammer verschließenden Verschlussplatte gehalten, die von der Stellspindel durchtreten wird. Andererseits liegt der Balg dichtend an der Stellspindel oder an einem Druckstück an, das auf der dem Bremsbelag zugewandten Seite drehbar auf der Stellspindel gelagert ist und das im Fall einer Bremsung den Bremsbelag kontaktiert. Eine solche Scheibenbremse ist im Übrigen in der DE 195 15 063 C1 offenbart.

Für den Fall einer einstückigen Ausbildung des Bremssattels, wenn also keine Verschlussplatte zum Einsatz kommt, ist der Balg direkt am Bremssattel, vorzugsweise ebenfalls reibschlüssig befestigt.

Zur axialen Beweglichkeit des Faltenbalges, insbesondere beim Zuspannen der Bremse, besteht der Balg in seinem formbaren Bereich aus einem Elastomer oder einem anderen geeigneten Kunststoff.

In jedem Fall muss der Balg bzw. das eingesetzte Material außerordentlich elastisch sein, um den Nachstellhub der Stellspindel ausgleichen zu können. Allerdings sind die hierzu geeigneten Materialien hinsichtlich ihrer Temperaturbeständigkeit eher eingeschränkt, so dass, aufgrund der im Anschlussbereich des Balges beim Bremsen entstehenden relativ hohen Temperaturen die Standzeit des Balges relativ gering ist, so dass ein Austausch während der Betriebsdauer der Scheibenbremse unumgänglich ist.

Ein solcher Austausch, der neben dem Balg auch das Druckstück betrifft, ist bei eingebauter Scheibenbremse aufgrund der herrschenden räumlichen Enge äußerst beschwerlich, so dass hierzu eine komplette Demontage der Scheibenbremse erforderlich ist, mit den sich daraus ergebenden, insbesondere kostenmäßigen Nachteilen. Diese ergeben sich sowohl aus der Montage- und Demontagezeit wie auch aus der Stillstandszeit des Fahrzeuges während dieser Arbeiten.

Eine gattungsgemäße Scheibenbremse ist aus der WO 2004/013510 A2 bekannt. Darin wird ein Nachstellelement im Sinne eines Spindeltriebes vorgeschlagen, mit einem eine Stellspindel bildenden Gewindebolzen und einer an einer Verschlussplatte gehaltenen Hülse, in die der Bolzen eingedreht ist. Ein Faltenbalg ist einerseits an einem Druckelement und andererseits an der Verbindungsplatte bzw. der Hülse verdrehfest gehalten.

Die WO 2008/025489 A1 sowie die EP 1 916 438 A1 offenbaren jeweils eine von der Gattung abweichende Scheibenbremse, da der die Durchtrittsöffnung der Verschlussplatte abdichtende Balg einerseits an der Verschlussplatte und andererseits axial gesichert an der dazu frei drehbaren Stellspindel gehalten ist, dieser jedoch nicht dichtend am Druckstück anliegt.

Der Erfindung liegt die Aufgabe zugrunde, eine Scheibenbremse der gattungsgemäßen Art so weiterzuentwickeln, dass die Montage und Demontage des Balges und/oder des Druckstücks einfacher und kostengünstiger möglich ist, bei gleichzeitig kostenoptimierter Herstellung dieser Teile.

Diese Aufgabe wird durch eine Scheibenbremse mit den Merkmalen des Anspruchs 1 gelöst.

Durch die erfindungsgemäß formschlüssige axiale Sicherung des Balges an der Stellspindel, die durch mit dem Balg verbundene Federelemente erreicht wird, ist eine äußerst einfache Demontage des Balges, d.h. ein Lösen von der Stellspindel möglich, wozu lediglich diese Federelemente, beispielsweise in Form von Federlaschen, aufgebogen werden müssen, was mit einfachen Werkzeugen und ohne besondere Kenntnis möglich ist.

Die Federlaschen sind an einen in den Balg eingebetteten Ring angeformt, der wiederum von dem Material des Balges umspritzt ist.

Diese Federlaschen hintergreifen in montierter Stellung einen Kopf der Stellspindel, der das Druckstück trägt und dessen Durchmesser größer ist als der mit dem Außengewinde versehene Schaft.

Das Druckstück selbst ist fest mit dem Balg verbunden, beispielsweise reibschlüssig, wozu zwischen dem Ring und einem Bündchen des Druckstückes ein Presssitz ausgebildet ist, so dass das Druckstück zur Stellspindel fest eingespannt ist, bei Eingriff der Federlaschen.

Insbesondere zur Sicherstellung eines festen Sitzes des Balges am Druckstück können beide Teile durch Verstemmen zusätzlich oder alternativ miteinander verbunden sein, wobei die Stellspindel gegenüber dem Druckstück verdrehbar gehalten ist.

Bevorzugt besteht der die Federlaschen aufweisende Ring aus einem Federblech, das entsprechend geformt ist, durch Stanzen und Umformen. Durch das Federblech in Kombination mit der Dämpfungseigenschaft des den Balg bildenden Kunststoffs werden in axialer Richtung hohe Auszugskräfte übertragen, wie sie beipielsweise durch temperaturbedingte Druckerhöhung in der insoweit abgedichteten Aufnahmekammer wirksam werden, wodurch ansonsten das Druckstück gegen den Bremsbelag gedrückt wird, ohne eine Betätigung der Bremse.

Die erfindungsgemäße Ausbildung schafft also die Voraussetzung, um das bekannte Restschleifmoment, hervorgerufen durch die ungewollte Anlage des Bremsbelages an der Bremsscheibe, zu minimieren.

Der Balg und das damit verbundene Druckstück können als Baueinheit vorgefertigt sein. Sollte die Notwendigkeit bestehen, den Balg aufgrund thermischer Überlastung tauschen zu müssen, so kann dies mit einfachem Werkzeug geschehen, wobei zunächst die Bremsbeläge aus der Bremsscheibe entnommen werden, wodurch ein ausreichend großer Raum entsteht, um die Stellspindeln so weit herauszudrehen, dass die Federlaschen frei zugänglich sind.

Der Balg kann dabei zerstört werden, beispielsweise durch Aufschneiden, so dass die Federlaschen frei zugänglich sind und zur Entnahme des Balges aufgebogen werden.

Wie erwähnt, sind der Balg und das Druckstück bevorzugt zu einer Baueinheit zusammengefügt, wobei sich die Federlaschen radial nach innen erstrecken.

Bei einer Montage wird diese Baueinheit mit dem Balg zuvorderst über den Kopf der Stellspindel gedrückt, wobei die Federlaschen gespreizt werden, bis der Kopf überfahren ist. Aufgrund der den Federlaschen inne wohnenden Rückstellkräfte nehmen diese nach dem Überfahren des Kopfes ihre ursprüngliche, radial ausgerichtete Stellung ein.

Durch die Vorspannkraft der Federlaschen ist ein axialer Toleranzausgleich zwischen der Stellspindel und dem aufgesetzten Druckstück möglich, d.h., das Druckstück wird gegen den Kopf gepresst.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine Scheibenbremse nach dem Stand der Technik in einer Draufsicht
- Figuren 2-6: ein Ausführungsbeispiel der Erfindung in verschiedenen Ansichten
- Figuren 7-10: ein weiteres Ausführungsbeispiel der Erfindung, gleichfalls in unterschiedlichen Ansichten
- Figuren 11 und 12: ein weiteres Ausführungsbeispiel, gleichfalls in verschiedenen Ansichten
- Figuren 13-15: eine weitere Variante der Erfindung, gleichfalls unterschiedlich dargestellt.

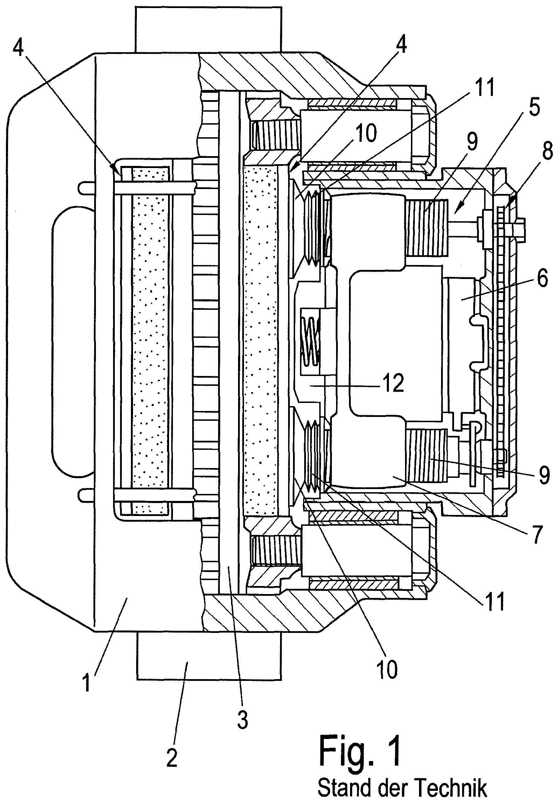

In der Figur 1 ist eine Scheibenbremse für Nutzfahrzeuge nach dem Stand der Technik abgebildet, mit einem eine fahrzeugseitige Bremsscheibe 3 übergreifenden Bremssattel 1, in dem zwei Bremsbeläge 4 gelagert sind, die bei einer Bremsung beidseitig gegen die Bremsscheibe 3 pressbar sind.

Hierzu ist eine Zuspanneinrichtung 5 im Bremssattel 1 angeordnet, die einen pneumatisch oder elektromechanisch betätigbaren, schwenkbaren Bremshebel 6 aufweist, der einerseits am Rücken des Bremssattels 1 anliegt und andererseits sich an einer Brücke 7 abstützt, in der verdrehbar zwei parallel und abständig zueinander angeordnete, mit einem Außengewinde versehene Stellspindeln 9 gehalten sind.

An dem dem zugeordneten Bremsbelag 4 zugewandten Ende trägt jede Stellspindel 9 ein Druckstück 10, die bei Betätigung des Bremshebels 6 in den Bremsbelag 4 und dieser damit gegen die Bremsscheibe 3 pressbar sind.

Weiter ist eine Nachstelleinrichtung 8 vorgesehen, mit der eine verschleißbedingte Änderung des Lüftspiels, d.h. des Abstands zwischen der Bremsscheibe 3 und den Bremsbelägen 4 ausgleichbar ist, wozu die Nachstelleinrichtung 8 in Eingriff steht mit den Stellspindeln 9.

Das Außengewinde dieser Stellspindeln 9 korrespondiert mit dem Gewinde einer Gewindebohrung in der Brücke 7, so dass bei einem Verdrehen der Stellspindeln 9 eine axiale Bewegung erfolgt.

Auf der dem zuspannseitigen Bremsbelag 4 zugewandten Seite ist der Bremssattel 1 durch eine Verschlussplatte 12 verschlossen, die von den Stellspindeln 9 durchtreten ist.

Um eine hermetische Abdichtung des die Zuspanneinrichtung 5 aufnehmenden, eine Aufnahmekammer bildenden Innenraumes des Bremssattels 1 im Durchtrittsbereich der Stellspindeln 9 zu erreichen, sind an jedem Druckstück 10 ein Balg 11, im Beispiel ein Faltenbalg, verdrehfest angeordnet, der andererseits mit dem Verschlussplatte 12, gleichfalls verdrehsicher verbunden ist.

Gemäß der Erfindung ist der Balg 11 formschlüssig axial gesichert an der dazu verdrehbaren Stellspindel 9 gehalten.

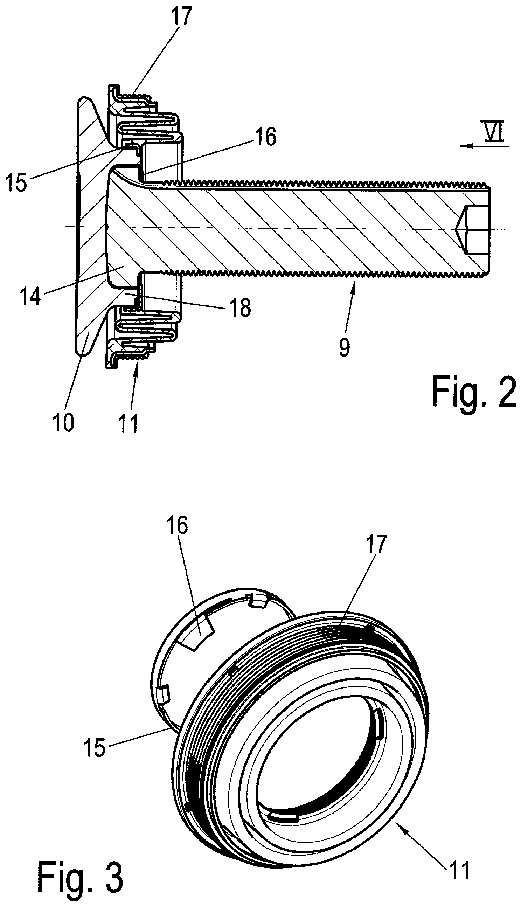

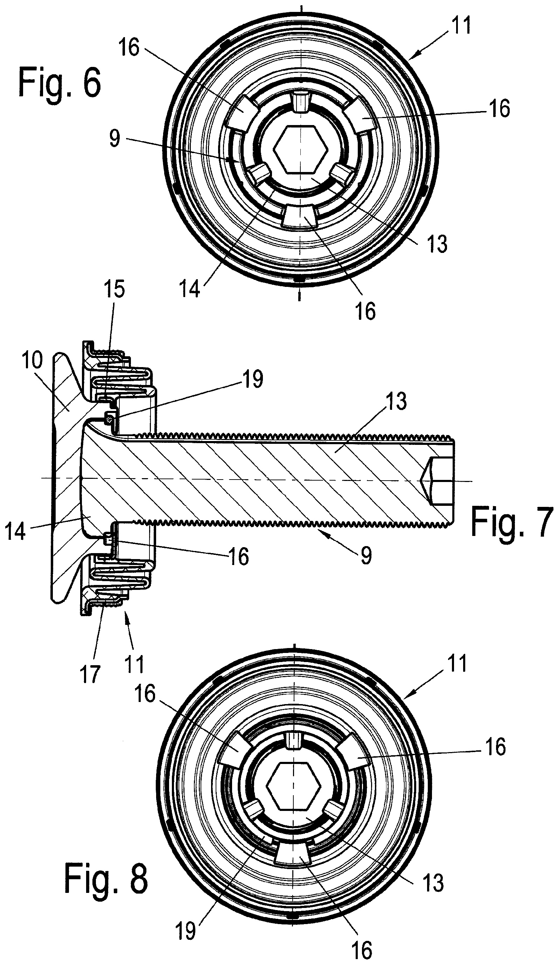

In den Figuren 2 und 7 ist eine Stellspindel 9 mit angeschlossenem Druckstück 10 und Faltenbalg 11 in einem Längsschnitt dargestellt. Darin ist zu erkennen, dass die Stellspindel 9 an dem dem Druckstück 10 zugewandten Ende einen angeformten Kopf 14 aufweist, dessen Außendurchmesser größer ist als der Außendurchmesser eines das Außengewinde tragenden Schaftes 13, an dem der Kopf 14 angeformt ist, der in einer Ausnehmung des Druckstücks 10 einliegt.

Die einfachste Art der Formschlussverbindung zwischen dem Faltenbalg 11 und der Stellspindel 9 ist in den Figuren 3-6 abgebildet, wobei die Figuren 3-5 jeweils unterschiedliche Montageschritte wiedergeben, während die Figur 6 eine Draufsicht in Richtung des Pfeiles VI in Fig. 2 zeigt.

Zum Formschluss ist ein Ring 15, vorzugsweise aus einem Federstahl bereitgestellt, der in der Figur 3 in Explosionsdarstellung als Einzelheit zu erkennen ist, wobei Federelemente in Form von Federlaschen 16 angeformt sich radial nach innen erstrecken.

Der Ring 15 wird in den aus einem geeigneten Kunststoff, beispielsweise einem Elastomer, hergestellten Faltenbalg 11 eingebettet, beispielsweise durch Spritzen. Dabei weist der Faltenbalg 11 im außenseitigen Mantelbereich einen mit einer Profilierung versehenen Hülsenabschnitt 17 auf, ebenfalls aus Metall, die zur Befestigung an der Verschlussplatte 12 in eine darin vorgesehene Öffnung eingepresst wird, so dass der Faltenbalg 11 an der Verschlussplatte 12 durch Reibschluss gehalten ist.

Ebenfalls durch Reibschluss wird das Druckstück 10 am mit dem Ring 15 komplettierten Faltenbalg 11 befestigt, wobei das Druckstück 10 ein angeformtes Bündchen 18 aufweist, das in den Ring eingepresst ist. Für eine zusätzliche Sicherung kann der Ring 15 mit dem Bündchen 18 verstemmt werden.

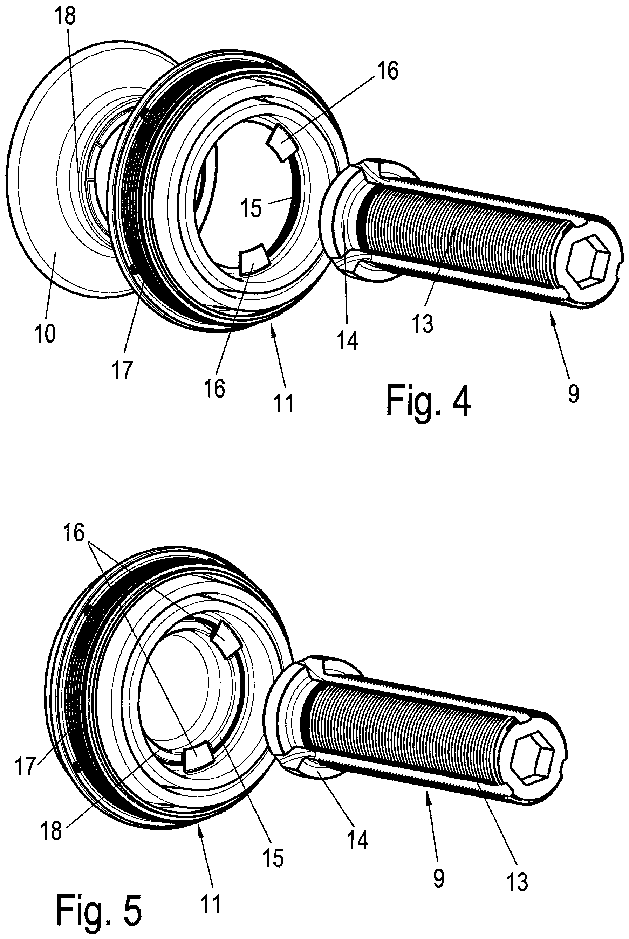

In der Figur 5 ist eine Position erkennbar, in der das Druckstück 10 in den Faltenbalg 11 eingefügt ist, bevor dieser mit der Stellspindel 9 verbunden wird.

Hierzu wird der Faltenbalg 11 mit den Federlaschen 16 voran über den Kopf 14 der Stellspindel 9 geschoben, unter Spreizung der Federlaschen 16, bis diese den Kopf 14 überfahren haben, so dass durch die Rückstellkräfte die Federlaschen 16 in ihre im Wesentlichen radiale Ausgangsstellung zurückschwenken unter Anlage am gegenüber dem Schaft 13 gebildeten Freischnitt.

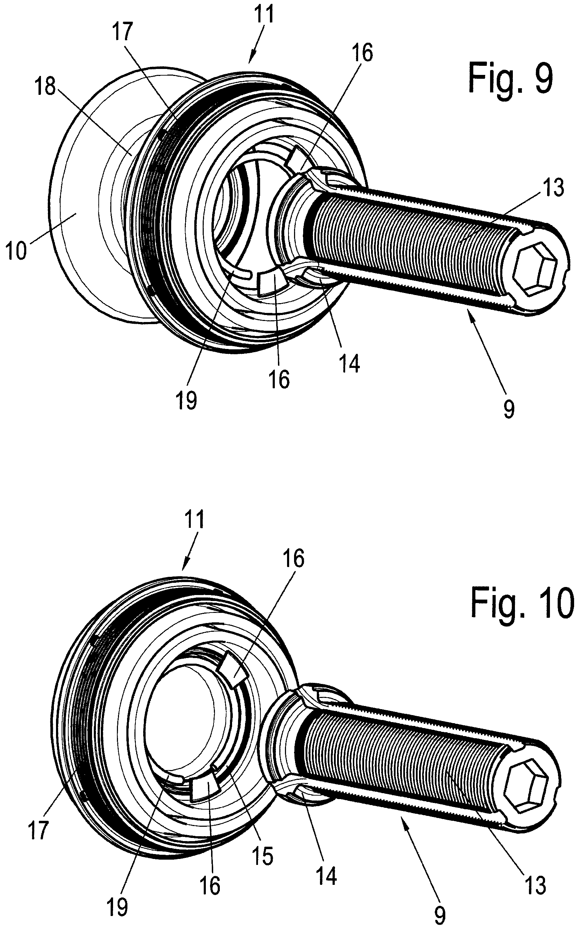

Eine gegenüber dem Beispiel nach den Figuren 2-6 variierte Ausführungsform ist in den Figuren 7-10 erkennbar. Hier ist zwischen der dem Druckstück 10 abgewandten Rückseite des Kopfes 14 und den Federlaschen 16 ein torusförmiger Trägerring im Sinne eines Sprengrings 19 eingelegt, an dem die Federlaschen 16 anliegen.

Damit wird wirksam verhindert, dass sich die Federlaschen 16 in die Anlagefläche des Kopfes 14 sozusagen eingraben, was die Verdrehung der Stellspindel 9 beeinträchtigen könnte. Im Übrigen entsprechen die Abbildungen den Montageschritten, wie sie zu den Figuren 4 und 5 beschrieben sind.

Wie deutlich erkennbar ist, sind die Federlaschen 16 in gleichem Winkelabstand zueinander angeordnet, wobei in den Beispielen insgesamt drei Federlaschen 16 vorgesehen sind. Denkbar ist aber auch jede andere geeignete Anzahl zu wählen.

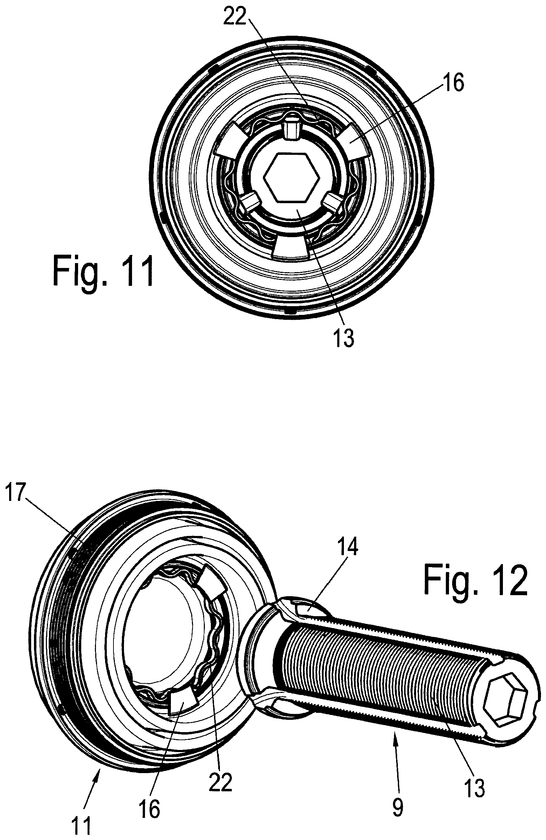

Für den gleichen Zweck, den der zuvor beschriebene Sprengring erfüllt, ist bei dem in den Figuren 11 und 12 gezeigten Beispiel ein Wellring 22 eingesetzt, der, ebenso wie der Sprengring 19, radial nach außen federnd in einer Ausnehmung des Druckstücks 10 im Bereich des Bündchens 18 anliegt.

Anstelle eines Wellrings 22 kann ein Polygonring eingesetzt sein, der ebenso wie der Wellring 22 im Querschnitt rund oder unrund ist.

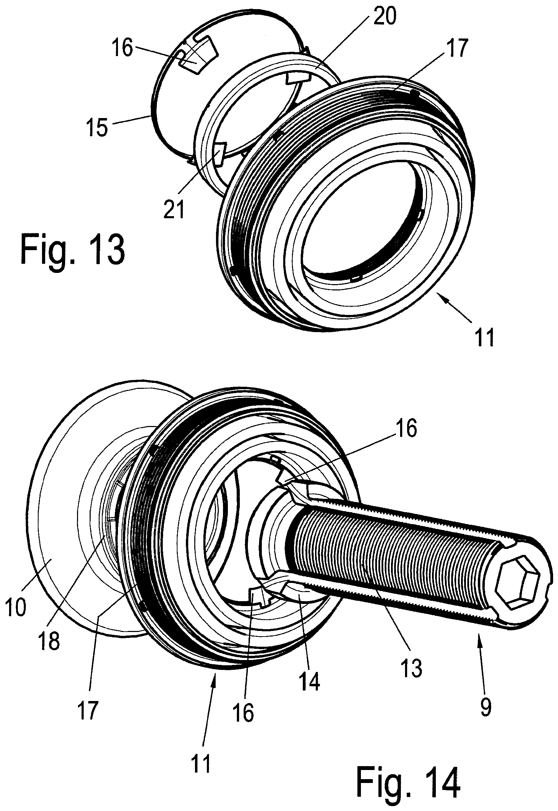

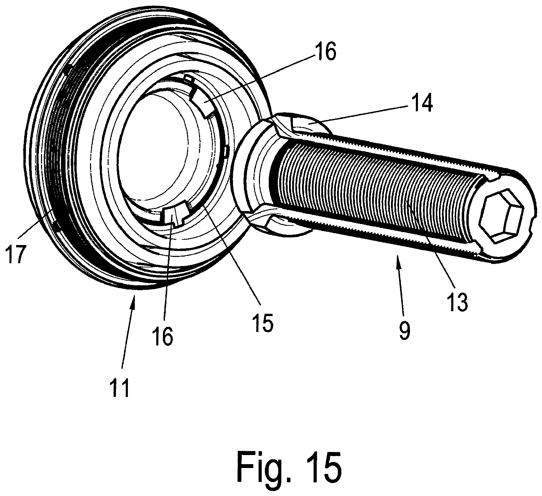

In den Figuren 13-15 schließlich ist eine Variante erkennbar, bei der der Ring 15 mit einem Stützring 20 verbunden ist, wozu dieser Federarme 21 aufweist, durch die ein Formschluss mit dem Ring 15 hergestellt ist, so dass beide Ringe vormontiert bei der Komplettierung vom Material des Faltenbalges 11 umspritzt werden können.

Während der Stützring 20 eine Komponente des mit dem Bündchen 18 des Druckstücks 10 gebildeten Presssitzes darstellt, kann unabhängig von der notwendigen Materialstärke der Ring 15 bzw. können die Federlaschen 16 hinsichtlich ihrer Materialbeschaffenheit und Dimensionierung frei gewählt werden.

## Patentansprüche

1. Scheibenbremse für ein Nutzfahrzeug, mit einem eine Bremsscheibe (3) übergreifenden Bremssattel (1), darin gelagerten Bremsbelägen (4), die die Bremsscheibe (3) in Funktionsstellung kontaktieren, wobei mindestens ein Bremsbelag (4) mittels einer Zuspanneinrichtung (5) über zumindest eine im Bremssattel (1) gelagerte Stellspindel (9) und ein damit verbundenes Druckstück (10) an die Bremsscheibe (3) andrückbar ist, wobei zur Abdichtung einer Durchtrittsöffnung der Stellspindel (9) mit dem Bremssattel (1) oder einer Verschlussplatte (12) ein daran direkt oder indirekt befestigter Balg (11) aus einem elastischen Kunststoff vorgesehen ist, der andererseits dichtend am Druckstück (10) anliegt, **dadurch gekennzeichnet, dass** der Balg (11) formschlüssig axial gesichert an der dazu verdrehbaren Stellspindel (9) gehalten ist.

2. Scheibenbremse nach Anspruch 1, **dadurch gekennzeichnet, dass** der Faltenbalg Federelemente aufweist, die formschlüssig in die Stellspindel (9) eingreifen.

3. Scheibenbremse nach Anspruch 2, **dadurch gekennzeichnet, dass** die Federelemente als Federlaschen (16) ausgebildet sind.

4. Scheibenbremse nach Anspruch 3, **dadurch gekennzeichnet, dass** die Federlaschen (16) eine dem Druckstück (10) abgewandte Rückseite eines Kopfes (14) der Stellspindel (9) hintergreifen.

5. Scheibenbremse nach einem der vorhergehenden Ansprüche, **dadurch gekennzeichnet, dass** mehrere, unter gleichem Winkelabstand zueinander stehende Federlaschen (16) vorgesehen sind.

6. Scheibenbremse nach einem der vorhergehenden Ansprüche, **dadurch gekennzeichnet, dass** die Federlaschen (16) an einen aus Federstahl gebildeten Ring (15) angeformt sind, der von dem Kunststoff des Faltenbalges (11) zumindest teilweise umspritzt ist.

7. Scheibenbremse nach einem der vorhergehenden Ansprüche, **dadurch gekennzeichnet, dass** der Ring (15) oder ein damit verbundener Stützring (20) reib- oder formschlüssig an einem Bündchen (18) des Druckstücks (10) gehalten ist.

8. Scheibenbremse nach einem der vorhergehenden Ansprüche, **dadurch gekennzeichnet, dass** an der den Federlaschen (16) zugewandten Stirnseite des Bündchens (18) und/oder an der zugewandten Rückseite des Kopfes (14) ein Trägerring angeordnet ist, an dem sich die Federlaschen (16) abstützen.

9. Scheibenbremse nach einem der vorhergehenden Ansprüche, **dadurch gekennzeichnet, dass** der Trägerring als ein radial nach außen spannbarer Sprengring (19) ausgebildet ist.

10. Scheibenbremse nach einem der vorhergehenden Ansprüche, **dadurch gekennzeichnet, dass** der Trägerring als ein radial nach außen federnder Wellring (22) ausgebildet ist.

11. Scheibenbremse nach einem der vorhergehenden Ansprüche, **dadurch gekennzeichnet, dass** der Trägerring sich an einer Wandung einer umfänglichen Ausnehmung des Bündchens (18) abstützt.

## Claims

1. A disc brake for a utility vehicle having a brake calliper (1) that encompasses a brake disc (3), in which are mounted brake pads (4) that make contact with the brake disc (3) in the operating position, it being possible to press at least one brake pad (4) onto the brake disc (3) by means of an application device (5) with at least one adjusting spindle (9) mounted in the brake calliper (1) and to which is connected a pressure piece (10), there being provided in order to seal an opening through the adjusting spindle (9) with the brake calliper (1) or a closing plate (12) a bellows (11) made of an elastic plastic and connected directly or indirectly thereto, the other side of the bellows (12) abutting the pressure piece (10) to form a seal, **characterised in that** the bellows (11) is secured axially in a form fit to the adjusting spindle (9), which can be rotated in relation to it.

2. A disc brake according to claim 1, **characterised in that** the folding bellows comprises spring elements that engage in a form fit in the adjusting spindle (9).

3. A disc brake according to claim 2, **characterised in that** the spring elements are designed as spring lugs (16).

4. A disc brake according to claim 3, **characterised in that** the spring lugs (16) engage behind a rear side of a head (14) of the adjusting spindle (9) facing away from the pressure piece (10).

5. A disc brake according to any of the preceding claims, **characterised in that** a plurality of spring lugs (16) is provided, each arranged at the same angular distance from the other.

6. A disc brake according to any of the preceding claims, **characterised in that** the spring lugs (16) are formed to a ring (15) made of spring steel that is at least partially injection-coated with the plastic of the folding bellows (11).

7. A disc brake according to any of the preceding claims, **characterised in that** the ring (7) or a supporting ring (20) connected to it is frictionally engaged with or held in a form fit on a cuff (18) of the pressure piece (10).

8. A disc brake according to any of the preceding claims, **characterised in that** arranged at the front face of the cuff (18) facing the spring lugs (16) and/or on the facing rear side of the head (14) is a carrier ring on which the spring lugs (16) rest.

9. A disc brake according to any of the preceding claims, **characterised in that** the carrier ring is designed as a radially outwardly tensionable circlip (19).

10. A disc brake according to any of the preceding claims, **characterised in that** the carrier ring is designed as a radially outwardly elastic corrugated ring (22).

11. A disc brake according to any of the preceding claims, **characterised in that** the carrier ring rests on a wall of a circumferential recess of the cuff (18).

## Revendications

1. Frein à disque d'un véhicule utilitaire, comprenant un étrier (1) de frein enjambant un disque (3) de frein, des garnitures (4) de frein, qui y sont montées et qui, en position de fonctionnement, entrent en contact avec le disque (3) de frein, au moins une garniture (4) de frein pouvant, au moyen d'un dispositif (5) de serrage, par l'intermédiaire d'au moins une broche (9) de réglage monté dans l'étrier (1) de frein et d'une pièce (10) d'application d'une pression, qui y est reliée, être repoussée sur le disque (3) de frein, dans lequel, pour rendre étanche une ouverture de passage de la broche (9) de réglage, est prévu, avec l'étrier (1) de frein ou une plaque (12) de fermeture, un soufflet (11) en une matière plastique élastique, qui y est fixé directement ou indirectement et qui s'applique, d'autre part, avec étanchéité à la pièce (10) d'application d'une pression, **caractérisé en ce que** le soufflet (11) est maintenu en étant fixé axialement à complémentarité de forme sur la broche (9) de réglage pouvant subir une torsion à cet effet.

2. Frein à disque suivant la revendication 1, **caractérisé en ce que** le soufflet à plis a des éléments à ressort, qui pénètrent à complémentarité de forme dans la broche (9) de réglage.

3. Frein à disque suivant la revendication 2, **caractérisé en ce que** les éléments à ressort sont constitués sous la forme de jumelles (16) de ressort.

4. Frein à disque suivant la revendication 3, **caractérisé en ce que** les jumelles (16) de ressort s'accrochent derrière un côté arrière, loin de la pièce (10) d'application d'une pression, d'une tête (14) de la broche (9) de réglage.

5. Frein à disque suivant l'une des revendications précédentes, **caractérisé en ce qu'**il est prévu plusieurs jumelles (16) de ressort équidistantes angulairement.

6. Frein à disque suivant l'une des revendications précédentes, **caractérisé en ce que** les jumelles (16) de ressort sont formées sur un anneau (15) en acier pour ressort, qui est surmoulé, au moins en partie, de la matière plastique du soufflet (11) à plis.

7. Frein à disque suivant l'une des revendications précédentes, **caractérisé en ce que** l'anneau (15) ou une bague (20) d'appui, qui y est reliée, est retenu à frottement ou à complémentarité de forme sur une collerette (18) de la pièce (10) d'application d'une pression.

8. Frein à disque suivant l'une des revendications précédentes, **caractérisé en ce que**, du côté, tourné vers les jumelles (16) de ressort, de la collerette (18) et/ou du côté arrière de la tête (14) est disposée une bague de support, sur laquelle s'appuient les jumelles (16) de ressort.

9. Frein à disque suivant l'une des revendications précédentes, **caractérisé en ce que** la bague de support est constituée sous la forme d'un jonc (19) élastique pouvant être tendu vers l'extérieur radialement.

10. Frein à disque suivant l'une des revendications précédentes, **caractérisé en ce que** la bague de support est constituée sous la forme d'une bague (22) ondulée élastique vers l'extérieur radialement.

11. Frein à disque suivant l'une des revendications précédentes, **caractérisé en ce que** la bague de support s'appuie sur une paroi d'un évidement faisant le tour de la collerette (18).
